# EUROPÄISCHE PATENTSCHRIFT

(11) **EP 2 419 234 B1**
(45) Veröffentlichungstag und Bekanntmachung des Hinweises auf die Patenterteilung: **18.01.2017**
(21) Anmeldenummer: 10721927.1
(22) Anmeldetag: 11.02.2010
(51) Int. Cl.: B23C 5/28

(54) **FRÄSWERKZEUG MIT INNEN LIEGENDER KÜHL-/SCHMIERMITTELVERSORGUNG**
MILLING CUTTER WITH AN INTERNAL COOLANT/LUBRICANT SUPPLY
OUTIL DE FRAISAGE DOTÉ D'UNE ALIMENTATION EN AGENT DE REFROIDISSEMENT/DE LUBRIFICATION SITUÉE À L'INTÉRIEUR DE CELUI-CI

(30) Priorität: 17.02.2009 DE 102009003499
(43) Veröffentlichungstag der Anmeldung: 22.02.2012
(73) Patentinhaber: Gühring KG, 72458 Albstadt (DE)
(72) Erfinder: EHRLER, Rolf, 79331 Teningen (DE)
(74) Vertreter: Winter, Brandl, Fürniss, Hübner, Röss, Kaiser, Polte - Partnerschaft mbB
(86) Internationale Anmeldenummer: PCT/DE2010/000154
(87) Internationale Veröffentlichungsnummer: WO 2010/094264

(56) Entgegenhaltungen:
- EP-A1- 0 223 909
- JP-A- 5 253 727
- JP-A- 7 040 129
- JP-A- 11 033 812
- JP-A- 51 142 179
- JP-A- 2001 025 915
- JP-A- 2003 285 220
- US-A1- 2008 193 234

## Beschreibung

Die vorliegende Erfindung betrifft ein Fräswerkzeug gemäß dem Oberbegriff des Anspruchs 1.

Da bei jedem spanabhebenden Fertigungsprozess insbesondere im Bereich der Schneiden von Fräswerkzeugen hohe Temperaturen entstehen, ist es notwendig, diesen Bereich mit einem geeigneten Kühl-/Schmiermittel zu kühlen, um eine Beschädigung von Werkstück und Werkzeug zu vermeiden. Es ist im Stand der Technik bekannt, hierzu zum Beispiel Kühl-/Schmiermittelkanäle entlang der Werkzeugoberfläche oder innerhalb des Werkzeugs (vgl. hierzu z.B. die JP 2001-25915 A, JP H5-253727 A, US 2008/0193234 A1, JP S51-142179 A, JP 2003-285220 A EP 0223909 A1 oder JP H7-40129 A) vorzusehen. Es ist ferner bekannt, einen zentralen Kühl-/Schmiermittelkanal vorzusehen, der in einzelne Stichkanäle aufzweigt, die zu den zu kühlenden / schmierenden Bereichen führen (vgl. hierzu z.B. die JP H11 33812 A). Die bekannten Anordnungen der Kühl-/Schmiermittelkanäle haben jedoch den Nachteil, dass sich durch einen durch einen Schleifvorgang bedingten Materialabtrag die räumlichen Verhältnisse zwischen den Schneiden und der Austrittsstelle bzw. Austrittsöffnung des Kühl-/Schmiermittelkanals und somit bei unveränderter Werkzeugdrehzahl und unverändertem Druck des Kühl-/Schmiermittels der Kühlungseffekt verändern.

Die oben angegebene JP 2001-25915 A offenbart ein gattungsgemäßes Fräswerkzeug, bei eine stirnseitige Austrittsstelle eines innenliegenden Kühl-/Schmiermittelkanals in Drehrichtung des Fräswerkzeugs vor einer zentrumschneidenden Stirnschneide liegt. Ausgehend von der JP 2001-25915 A hat die Erfindung die Aufgabe, ein Fräswerkzeug mit einem vom Nachschliff unabhängigen, Kühlungseffekt und verbesserter Spanabfuhr bereitzustellen.

Diese Aufgabe wird durch die Merkmale des Anspruchs 1 gelöst. Vorteilhafte Weiterbildungen sind Gegenstand der abhängigen Ansprüche 2 bis 9.

Gemäß der Erfindung umfasst ein Fräswerkzeug einen Einspannabschnitt und einen Schneidabschnitt, der wenigstens eine Stirnschneide und eine damit verbundene, um einen Werkzeugkern wendelförmig verlaufende Umfangsschneide aufweist, eine der Umfangsschneide zugeordnete und parallel zu ihr verlaufende Spannut, und einen ersten Kühl-/Schmiermittelkanal zur Kühlung der wenigstens einen Stirnschneide, wobei der Kühl-/Schmiermittelkanal in dem Werkzeugkern entlang des Spannutgrundes ausgebildet ist und eine stirnseitige Austrittsstelle besitzt.

Dadurch, dass der erste Kühl-/Schmiermittelkanal im Werkzeugkern dem Verlauf des Spannutgrundes folgt, der Spannutgrund und der Kühl-/Schmiermittelkanal also zwei Parallelkurven bilden, wird die räumliche Beziehung zwischen der zu kühlenden Stirnschneide und dem aus dem Kühl-/Schmiermittelkanal austretenden Kühl-/Schmiermittelstrahl durch den beim Schleifen auftretenden Materialabtrag nicht verändert. Insbesondere ist durch die erfindungsgemäße Ausgestaltung des Fräswerkzeugs die Orientierung des stirnseitig austretenden Kühl-/Schmiermittelstrahls bezüglich der Schneidengeometrie der Stirnschneiden bei gegebener Drehzahl des Fräswerkzeugs und gegebenem Druck des Kühl-/Schmiermittels konstant. Mit anderen Worten, die gewendelte Struktur des Kühl-/Schmiermittelkanals ist erfindungsgemäß eine Projektion der gewendelten Struktur des Spannutgrundes auf einen gedachten Zylinder innerhalb des Werkzeugkerns, was zur Folge hat, dass die Steigung des Kühlmittelkanals, die proportional zu dem Verhältnis aus Ganghöhe und Radius ist, größer als die des Spannutgrundes ist, beide folglich einen Winkel einschließen und somit der austretende Kühl-/Schmiermittelstrahl in räumlich konstanter - insbesondere vom Nachschliff unabhängiger - Orientierung auf die Spanfläche der Stirnschneide gerichtet ist. Erfindungsgemäß haben daher im Rahmen fertigungstechnischer Toleranzen die Kurve des Kühl-/Schmiermittelkanals und die des Spannutgrundes gleich große Ganghöhen.

Die wenigstens eine Stirnschneide des erfindungsgemäßen Fräswerkzeug weist wenigstens eine erste zentrumschneidende Stirnschneide auf, die sich in den Werkzeugkern erstreckt (im Folgenden "Schneidentyp I" genannt), sie kann des Weiteren wenigstens eine so genannte nicht-zentrumschneidende Stirnschneide, die sich nicht in den Werkzeugkern erstreckt (im Folgenden "Schneidentyp II" genannt), oder (c) eine Kombination der aus (a) und (b), also der Schneidtypen I und II umfassen. Zum Beispiel kann der Fräser ein einschneidiger Fräser mit einer Stirnschneide vom Typ I, oder ein zweischneidiger Fräser, bei dem zwei Stirnschneiden unterschiedlichen oder (vorzugsweise) gleichen Typs gegenüberliegend angeordnet sind, oder ein vierschneidiger Fräser mit einem Paar von gegenüberliegenden Stirnschneiden vom Typ I und, versetzt dazu, einem Paar von gegenüberliegenden Stirnschneiden vom Typ II. Da der Kühl-/Schmiermittelkanal innerhalb des Werkzeugkerns verläuft, liegt dessen Austrittsstelle nur im Falle des Typs I wenigstens teilweise in der Spanfläche der Stirnschneide. Insbesondere liegt die stirnseitige Austrittsstelle des Kühl-/Schmiermittelkanals in einem die jeweilige Stirnschneide von dem in Drehrichtung vorauseilenden Schneidkeil trennenden Freischliff.

Durch die Merkmale des Anspruchs 3 wird eine Vereinfachung des vorzugsweise durch Sintern hergestellten Fräsers erreicht. Die Erfindung ist aber nicht hierauf begrenzt. So ist es auch möglich, dass sich der Kühl-/Schmiermittelkanal geradlinig oder gebogen, nicht jedoch wendelförmig in den Einspannabschnitt fortsetzt. In beiden Fällen befindet sich die Eintrittsstelle des Kühl-/Schmiermittelkanals (bzw. des Kühl-/Schmiermittels) stirnseitig bezogen auf den Einspannabschnitt.

Durch die Merkmale des Anspruchs 4 wird der Schneidabschnitt außer an der/den Stirnschneide(n) auch an der/den Umfangsschneide(n) gekühlt, wobei in dem Einspannabschnitt vorteilhafterweise erste und zweite Kühl-/Schmiermittelkanäle integriert sind. Die Form des zweiten Kühl-/Schmiermittelkanals kann geradlinig oder, was fertigungstechnische Vorteile hat und wie es in Anspruch 6 definiert ist, gewendelt sein. Da der zweite Kühl-/Schmiermittelkanal in Längsrichtung des Werkzeugs vor dem ersten nach außen geführt ist, ist es vorteilhaft, den zweiten Kühl-/Schmiermittelkanal radial außerhalb des ersten anzuordnen, wie es in Anspruch 7 definiert ist.

Fertigungstechnisch vorteilhaft im Hinblick auf die wendelförmige Auslegung des ersten Kühl-/Schmiermittelkanals ist eine ebensolche Gestaltung des zweiten Kühl-/Schmiermittelkanals, wobei die Ganghöhe beider Kanäle gleich ist, wie es in Anspruch 7 definiert ist.

Die obigen und weitere Aufgaben, Eigenschaften und Vorteile der vorliegenden Erfindung sind aus der nachfolgenden detaillierten Beschreibung, die unter Bezugnahme auf die beigefügte Zeichnung gemacht wurde, deutlicher ersichtlich. In den Zeichnungen sind:
Fig. 1 eine Seitenansicht eines Rohlings für einen Fräser gemäß einer ersten Ausführungsform der vorliegenden Erfindung;
Fig. 2A ein Fräser gemäß der ersten Ausführungsform der vorliegenden Erfindung, Fign. 2B und 2D Schnittansichten gemäß den Linien B-B, G-G und H-H in Fig. 2A, und Fig. 2C ein vergrößertes Detail der Schnittansicht von Fig. 2B;
Fig. 3 eine Frontansicht von links in Fig. 2A betrachtet und Seitenansicht, die die Schneidengeometrie zeigen, sowie Schnittansichten entlang der Linien D-D und F-F in Fig. 3;
Fig. 4 eine perspektivische Ansicht eines Schneidabschnitts und ein Längsschnitt entlang der Linie A-A in Fig. 3; und
Fig. 5 eine Ansicht einer Stirnfläche von rechts in Fig. 2A, die die Eintrittsstellen von vier Kühl-/Schmierkanälen zeigt.

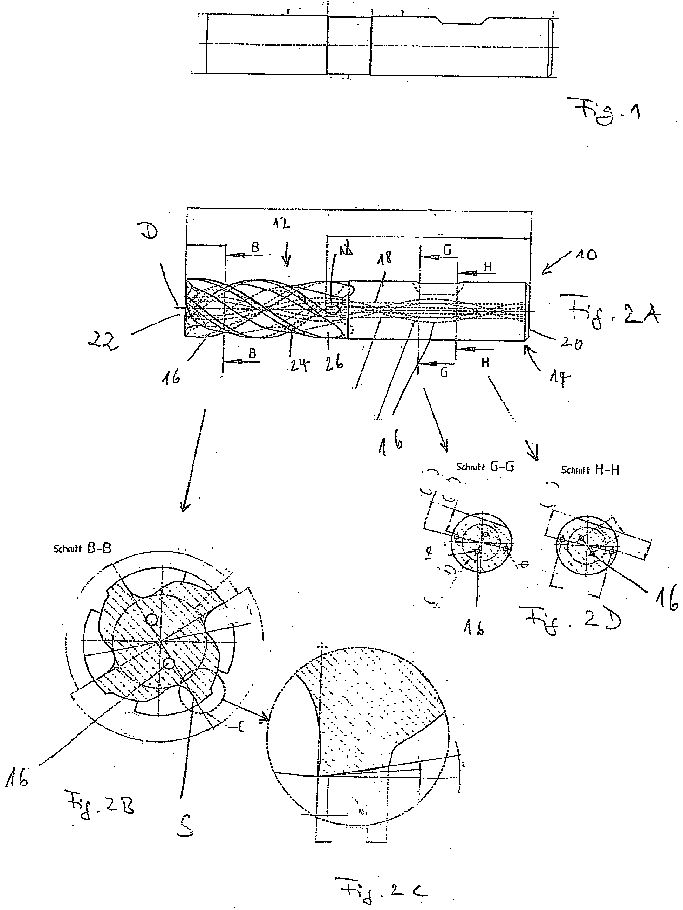

Ausgehend von einem Rohling wie er in Fig. 1 gezeigt ist - wobei die dortigen Größenangaben, ebenso wie die in den weiteren Figuren, in "mm" zu verstehen sind - wird ein Fräser 10 gemäß einer Ausführungsform der vorliegenden Erfindung, wie er in Fig. 2A in der Seitenansicht dargestellt ist, hergestellt. Die in den Figuren enthaltenen Größenangaben beziehen sich auf eine beispielhafte Ausführungsform des erfindungsgemäßen Fräswerkzeugs, stellen jedoch keinerlei Schutzbereichsbeschränkung dar. Der erfindungsgemäße Fräser 10 gemäß der Ausführungsform ist ein vierschneidiger Stirnfräser mit zwei gegenüberliegenden, zentrumschneidenden Stirnschneiden, die sich bis zum Zentrum (der Drehachse) erstrecken, und zwei gegenüberliegenden nicht zentrumschneidenden Stirnschneiden, die vollständig außerhalb des Kerns angeordnet sind, und umfasst einen Schneidabschnitt 12 und einen Einspannabschnitt bzw. Schaft 14 mit gemeinsamer Drehachse D, die axial miteinander verbunden sind.

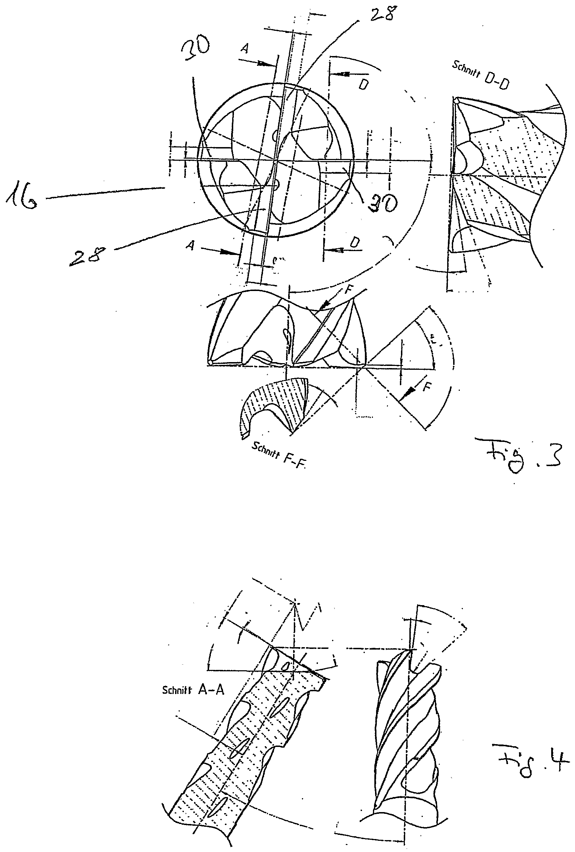

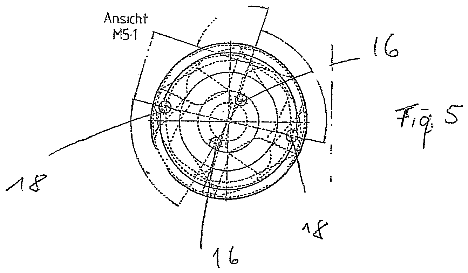

In dem Fräser 10 sind, in Fig. 2A gestrichelt dargestellt, zwei erste Kühl-/Schmiermittelkanäle 16, die sich über die gesamte Länge des Fräsers 10 erstrecken, auf einer Stirnseite 20 des Einspannabschnitts 14 in den Fräser 10 eintreten (vgl. Fig. 5) und auf einer gegenüberliegenden Stirnseite 22 des Schneidabschnitts 12 aus dem Fräser 10 austreten, ausgebildet. Jeder der zwei ersten Kühl-/Schmiermittelkanäle 16 ist durchgängig wendel- oder helixförmig mit der Drehachse D des Fräsers 10 als Mittenachse und innerhalb des Werkzeugkerns des Schneidabschnitts 12 sowie dessen gedachter Fortsetzung in und durch den Einspannabschnitt 14 ausgebildet. Wie es in den Schnittansichten der Fign. 2B und 2D gezeigt ist, sind die zwei "Wendeln" der zwei ersten Kühl-/Schmiermittelkanäle 16 um etwa 180° zueinander versetzt, d. h. ihre Durchstoßpunkte durch eine beliebige Schnittfläche des Fräsers 10 senkrecht zu dessen Drehachse D liegen einander bezüglich des jeweiligen Durchstoßpunktes der Drehachse D des Fräsers 10 gegenüber. Ferner ist, insbesondere beim Vergleich der Schnittansichten G-G und H-H der Fig. 2D, die unterschiedliche solcher Schnittebenen darstellen, die Drehung bzw. "Verwendelung" der zwei zusammen Doppelhelix-artig angeordneten Kühl-/Schmiermittelkanäle 16 erkennbar. In Fig. 4, die einen Längsschnitt des Fräsers 10 zeigt, ist die Lage der zwei ersten Kühl-/Schmiermittelkanäle 16 in dem Werkzeugkern durch deren Durchstoßflächen durch diese Schnittebene zu erkennen.

Wie es zum Beispiel in Fig. 2B gezeigt ist, ist der Fräser 10 gemäß der Ausführungsform ein vierschneidiger Fräser 10, der vier Umfangsschneiden 24 und somit vier Spannuten 26 besitzt. Demgegenüber besitzt der Fräser 10 nur zwei, über seine gesamte Länge durchgängige Kühl-/Schmiermittelkanäle 16, die jeweils einer der beiden zentrumschneidenden Stirnschneiden 28 zugeordnet sind, die sich in radialer Richtung in den Bereich des Werkzeugkerns erstrecken, wie es in Fig. 3 gezeigt und oben angesprochen ist. Zusätzlich zu den genannten zentrumschneidenden Stirnschneiden 28 sind auf der Stirnseite des Schneidabschnitts 12 noch weitere zwei nicht-zentrumschneidende Stirnschneiden 30 ausgebildet, die sich jedoch nicht in radialer Richtung in den Bereich des Werkzeugkerns erstrecken und denen daher keine ersten Kühl-/ Schmiermittelkanäle 16 zugeordnet sind, da Kühl-/Schmiermittel, das aus entsprechend ausgebildeten und angeordneten Kühl-/Schmiermittelkanälen, deren Austrittsstellen stirnseitig innerhalb des Werkzeugkerns angeordnet wären, austreten würde, nicht direkt auf Spanflächen S der Stirnschneiden 30 auftreffen würde (es sind jedoch auch bei dieser Schneidengeometrie vier Kühl-/Schmiermittelkanäle denkbar). Wie es in Fig. 3 zu erkennen ist, die eine Draufsicht von rechts in Fig. 2A auf die Stirnseite des Schneidabschnitts 12 zeigt, überragt aus dieser axialen Betrachtung jede der Stirnschneiden 28 teilweise ihren zugehörigen Kühl-/Schmiermittelkanal 16, und jede der Stirnschneiden 28, 30 geht in eine der Umfangsschneiden 24 über. Die Austrittstellen bzw. -Öffnungen de Kühl-/Schmiermittelkanäle 16 liegen in dem die jeweilige Stirnschneide von dem in Drehrichtung vorauseilenden Schneidkeil trennenden Freischliff, teilweise in der Spanfläche S der Stirnschneide.

Durch die oben angesprochene Parallelführung von Spannut 26 und erstem Kühl-/Schmiermittelkanal 16 sowie deren unterschiedliche Radien haben beide dieselbe Ganghöhe, jedoch unterschiedliche Steigungen, was zur Folge hat, dass der Strahl des austretenden Kühl-/Schmiermittels stärker zu der Spanfläche S (vgl. Fig. 2B) gerichtet ist; der Tangentenvektor an die Kurve des Spannutgrundes ist flacher als der der Kurve des Kühl-/Schmiermittelkanals, letzterer ist gegenüber ersterem zur Spanfläche S hin geneigt, wie nachstehend weiter ausgeführt ist.

Im gleichen Drehsinn wie der der wendelförmigen Kühl-/Schmiermittelkanäle 16 ragt von dem Werkzeugkern nach außen die wendelförmige Struktur der Umfangsschneiden 24 hervor, wobei zwischen jeweils zwei Umfangsschneiden 24 eine Spannut 26 gebildet ist. In dem erfindungsgemäßen Fräser 10 folgt einer Kurve des Spannutgrundes jeder zweiten Spannut 26, also der aus den "tiefsten" Punkten der jeweiligen Spannut 26 gebildeten Kurve, nach innen versetzt eine Kurve des Kühl-/Schmiermittelkanals 16; beide bilden zwei so genannte Parallelkurven. Mit anderen Worten, die Kurve des Kühl-/Schmiermittelkanals 16 ist die Projektion der Kurve des zugeordneten Spannutgrundes der Spannut 26 auf einen gedachten Zylinder, dessen Durchmesser kleiner als der des Werkzeugkerns ist, wobei die wendelförmigen Strukturen des Kühl-/Schmiermittelkanals 16 und des Spannutgrundes und der gedachte Zylinder koaxial zur Drehachse D sind.

Der Fräser 10 gemäß der Ausführungsform weist ferner zwei zweite Kühl-/Schmiermittelkanäle 18 auf, die sich jeweils parallel zu der Drehachse D des Fräsers 10 und einander bezüglich dessen Drehachse D gegenüberliegend erstrecken. Die zwei zweiten Kühl-/Schmiermittelkanäle 18 treten, ebenso wie die zwei ersten Kühl-/Schmiermittelkanäle 16, auf der Stirnseite des Einspannabschnitts 14 in den Fräser 10 ein, wie es in Fig. 5 gezeigt ist, jedoch in einem dieser Stirnseite zugewandten Endabschnitt entsprechender Spannuten 26 aus (vgl. Fig. 2A).

Die zweiten Kühl-/Schmiermittelkanäle 18 unterscheiden sich somit von den ersten Kühl-/Schmiermittelkanälen 16 gemäß diese Ausführungsform durch folgende zwei Merkmale: (a) Im Gegensatz zu den ersten Kühl-/Schmiermittelkanäle 16, die der Kühlung und Schmierung der Stirnschneiden 28 (direkt) und 30 (indirekt) dienen, dienen die zweiten Kühl-/Schmiermittelkanäle 18 der Kühlung und Schmierung der Umfangsschneiden 26. (b) Im Gegensatz zu den ersten Kühl-/Schmiermittelkanäle 16, die zusammen eine dreidimensionale Doppelhelixstruktur bilden, liegen die zweiten Kühl-/Schmierrnittelkanäle 18 in einer Ebene.

### Bezugszeichenliste

- 10: Fräser
- 12: Schneidabschnitt
- 14: Einspannabschnitt
- 16: Erster Kühl-/Schmiermittelkanal
- 18: Zweiter Kühl-/Schmiermittelkanal
- 20: Stirnseite von 14
- 22: Stirnseite von 12
- 24: Umfangsschneiden
- 26: Spannuten
- 28: Zentrumschneidende Stirnschneiden
- 30: Nicht-zentrumschneidende Stirnschneiden

- D: Drehachse
- S: Spanfläche

## Patentansprüche

1. Fräswerkzeug (10) mit innen liegender Kühl-/Schmiermittelversorgung, mit:
- einem Einspannabschnitt (14) und einem Schneidabschnitt (12), der wenigstens eine Stirnschneide (26, 28) und eine damit verbundene, um einen Werkzeugkern wendelförmig verlaufende Umfangsschneide (24) aufweist;
- einer der Umfangsschneide (24) zugeordneten und parallel zu ihr verlaufenden Spannut (26); und
- einem ersten Kühl-/Schmiermittelkanal (16) zur Kühlung der wenigstens einen Stirnschneide (26, 28), der in dem Werkzeugkern, entlang des Spannutgrundes ausgebildet ist und eine stirnseitige Austrittsstelle besitzt,
- wobei die wenigstens eine Stirnschneide (26, 28) wenigstens eine erste zentrumschneidende Stirnschneide (28) umfasst, **dadurch gekennzeichnet, dass**
- die stirnseitige Austrittsstelle des ersten Kühl-/Schmiermittelkanals (16) in Drehrichtung vor der wenigstens einen ersten zentrumschneidenden Stirnschneide (28) in einem Freischliff derselben angeordnet ist.

2. Fräswerkzeug (10) nach Anspruch 1, **dadurch gekennzeichnet, dass** die stirnseitige Austrittsstelle des ersten Kühl-/Schmiermittelkanals (16) wenigstens teilweise in der Spanfläche der wenigstens einen ersten zentrumschneidenden Stirnschneide (28) angeordnet ist.

3. Fräswerkzeug (10) nach Anspruch 1 oder 2, **dadurch gekennzeichnet, dass** sich die Wendelform des ersten Kühl-/Schmiermittelkanals (16) in den Einspannabschnitt (14) fortsetzt.

4. Fräswerkzeug (10) nach einem der Ansprüche 1 bis 3, **gekennzeichnet durch** einen zweiten Kühl-/Schmiermittelkanal (18) zur Kühlung der Umfangsschneide (24), dessen Eintrittsstelle auf der Stirnseite des Einspannabschnitts (14) und dessen Austrittsstelle im Bereich des einspannabschnittseitigen Endes der Spannut (26) angeordnet ist.

5. Fräswerkzeug (10) nach Anspruch 4, **dadurch gekennzeichnet, dass** der zweite Kühl-/Schmiermittelkanal (18) radial außerhalb des sich in den Einspannabschnitt (12) fortgesetzt gedachten Werkzeugkerns angeordnet ist.

6. Fräswerkzeug (10) nach Anspruch 4 oder 5, **dadurch gekennzeichnet, dass** der zweite Kühl-/Schmiermittelkanal (18) wendelförmig ausgebildet ist.

7. Fräswerkzeug (10) nach Anspruch 6, **dadurch gekennzeichnet, dass** der erste und der zweite Kühl-/Schmiermittelkanal (16, 18) die gleiche Ganghöhe besitzen.

8. Fräswerkzeug (10) nach Anspruch 4 oder 5, **dadurch gekennzeichnet, dass** der zweite Kühl-/Schmiermittelkanal (18) geradlinig ausgebildet ist.

9. Fräswerkzeug (10) nach einem der Ansprüche 1 bis 8, **dadurch gekennzeichnet, dass** es zwei einander gegenüberliegende zentrumschneidende Stirnschneiden (28) und zwei einander gegenüberliegende nicht-zentrumschneidende Stirnschneiden (30) umfasst.

## Claims

1. Milling cutter (10) with an internal coolant/lubricant supply, comprising:
- a chuck section (14) and a cutting section (12), which has at least one front cutting edge (26, 28) and a circumferential cutting edge (24) that is connected to the front cutting edge and spirals around a tool core;
- a flute (26) associated with the circumferential cutting edge (24) and running parallel thereto; and
- a first coolant/lubricant channel (16) for cooling the at least one front cutting edge (26, 28), formed in the tool core along the base of the flute and having a discharge point on the front face,
- wherein the at least one front cutting edge (26, 28) comprises at least one first center-cutting front cutting edge (28) **characterized in that**
- the discharge point on the front face of the first coolant/lubricant channel (16) is arranged in the rotation direction before the at least one first center-cutting front cutting edge (28) in a free cut thereof.

2. Milling cutter (10) according to claim 1, **characterized in that** the discharge point on the front face of the first coolant/lubricant channel (16) is at least partially arranged in the chip face of the at least one first center-cutting front cutting edge (28).

3. Milling cutter (10) according to claim 1 or 2, **characterized in that** the spiral shape of the first coolant/lubricant channel (16) continues into the chuck section (14).

4. Milling cutter (10) according to one of claims 1 to 3, **characterized by** a second coolant/lubricant channel (18) for cooling the circumferential cutting edge (24), wherein the entry point of the second coolant/lubricant channel (18) is arranged on the front side of the chuck section (14) and whose discharge point is arranged in the region of the chuck-section-side end of the flute (26).

5. Milling cutter (10) according to claim 4, **characterized in that** the second coolant/lubricant channel (18) is arranged radially outside of the tool core as imagined continuation into the chuck section (12).

6. Milling cutter (10) according to claim 4 or 5, **characterized in that** the second coolant/lubricant channel (18) has a spiral shape.

7. Milling cutter (10) according to claim 6, **characterized in that** the first and the second coolant/lubricant channel (16, 18) have the same pitch.

8. Milling cutter (10) according to claim 4 or 5, **characterized in that** the second coolant/lubricant channel (18) has a linear form.

9. Milling cutter (10) according to one of the claims 1 to 8, **characterized in that** it comprises two center-cutting front cutting edges (28) facing each other and two non-center-cutting front cutting edges (30) facing each other.

## Revendications

1. Outil de fraisage (10) comprenant une alimentation en liquide de refroidissement/en lubrifiant située à l'intérieur, comprenant :
- un tronçon de serrage (14) et un tronçon coupant (12), qui présente au moins une lame frontale (26, 28) et une lame périphérique (24) reliée à cette dernière, s'étendant de manière à présenter une forme hélicoïdale autour d'une partie centrale d'outil ;
- une goujure (26) associée à la lame périphérique (24) et s'étendant de manière parallèle par rapport à cette dernière ; et
- un premier canal de liquide de refroidissement/de lubrifiant (16) servant à refroidir l'au moins une lame frontale (26, 28), lequel est réalisé dans la partie centrale d'outil le long de la base de goujure et qui possède un point de sortie situé côté frontal,
- dans lequel l'au moins une lame frontale (26, 28) comprend au moins une première lame frontale (28) à découpage centré, **caractérisé en ce que**
- le point de sortie situé côté frontal du premier canal de liquide de refroidissement/de lubrifiant (16) est disposé dans la direction de rotation devant l'au moins une première lame frontale (28) à découpage centré dans une section polie dégagée de cette dernière.

2. Outil de fraisage (10) selon la revendication 1, **caractérisé en ce que** le point de sortie situé côté frontal du premier canal de liquide de refroidissement/de lubrifiant (16) est disposé au moins en partie dans la face d'attaque de l'au moins une première lame frontale (28) à découpage centré.

3. Outil de fraisage (10) selon la revendication 1 ou 2, **caractérisé en ce que** la forme hélicoïdale du premier canal de liquide de refroidissement/de lubrifiant (16) se poursuit dans la section de serrage (14).

4. Outil de fraisage (10) selon l'une quelconque des revendications 1 à 3, **caractérisé par** un deuxième canal de liquide de refroidissement/de lubrifiant (18) servant à refroidir la lame périphérique (24), dont le point d'entrée est disposé sur le côté frontal de la section de serrage (14) et dont le point de sortie est disposé dans la zone de l'extrémité, située côté du tronçon de serrage, de la goujure (26).

5. Outil de fraisage (10) selon la revendication 4, **caractérisé en ce que** le deuxième canal de liquide de refroidissement/de lubrifiant (18) est disposé de manière radiale à l'extérieur de la partie centrale d'outil imaginaire se poursuivant dans le tronçon de serrage (12).

6. Outil de fraisage (10) selon la revendication 4 ou 5, **caractérisé en ce que** le deuxième canal de liquide de refroidissement/de lubrifiant (18) est réalisé de manière à présenter une forme hélicoïdale.

7. Outil de fraisage (10) selon la revendication 6, **caractérisé en ce que** le premier et le deuxième canal de liquide de refroidissement/de lubrifiant (16, 18) possèdent le même pas.

8. Outil de fraisage (10) selon la revendication 4 ou 5, **caractérisé en ce que** le deuxième canal de liquide de refroidissement/de lubrifiant (18) est réalisé de manière rectiligne.

9. Outil de fraisage (10) selon l'une quelconque des revendications 1 à 8, **caractérisé en ce qu'**il comprend deux lames frontales (28) à découpage central se faisant face et deux lames frontales (30) à découpage non central se faisant face.
